(19) Europäisches Patentamt

European Patent Office

Office européen des brevets

(11) **EP 1 127 720 B1**

(12) **EUROPEAN PATENT SPECIFICATION**

(45) Date of publication and mention
of the grant of the patent:
**22.11.2006 Bulletin 2006/47**

(51) Int Cl.:
***B60C 23/06*** *(2006.01)*

(21) Application number: **01301592.0**

(22) Date of filing: **22.02.2001**

(54) **Apparatus and method for alarming decrease in tyre air-pressure**

Vorrichtung und Verfahren zum Detektieren eines Druckabfalls im Reifen

Appareil et procédé pour la détection d'une baisse de pression dans un pneumatique

(84) Designated Contracting States:
**DE FR GB IT SE**

(30) Priority: **23.02.2000 JP 2000046146**

(43) Date of publication of application:
**29.08.2001 Bulletin 2001/35**

(73) Proprietors:
• **Sumitomo Rubber Industries Ltd**
**Kobe-shi,**
**Hyogo-ken (JP)**
• **Sumitomo Electric Industries, Ltd.**
**Osaka-fu (JP)**

(72) Inventor: **Sugisawa, Toshifumi,**
**c/o Sumitomo Rubber Ind Ltd**
**Kobe-shi,**
**Hyogo-ken (JP)**

(74) Representative: **Manitz, Finsterwald & Partner**
**GbR**
**Postfach 31 02 20**
**80102 München (DE)**

(56) References cited:
**EP-A- 0 650 856**

**Description**

The present invention relates to an apparatus and method for alarming decrease in tyre air-pressure. More particularly, the present invention relates to an apparatus and method for alarming decrease in tyre air-pressure capable of accurately correcting cornering and improving accuracy for detecting reduction in tyre pressure.

Such an apparatus and such a method are known from EP-A-0 650 856. This document is directed to calculating the steering angle of the vehicle in two different ways and weighting the two different results depending on the steering angle.

A conventional device (DWS system) for detecting decrease in tyre air-pressure judges tyre pressure reduction based on information from four ABS wheel speed sensors. The change of wheel speed is influenced by cornering as well as pressure reduction of the tyres. According to the conventional DWS, all factors including the radius of cornering are calculated based on the information from the ABS sensors so as to decrease the influence of cornering and then a cornering correction is made. Even with this cornering correction, since the influences of the movement of load and slip generated during cornering slightly change, the cornering correction cannot be completely made. According to the conventional DWS, however, the judgement values (DEL values) of the pressure reduction of tyres calculated for about one minute are averaged and pressure reduction is judged based on the calculated average value. On an ordinary road, right and left curves exist almost in the same degree. For that reason, if a vehicle is running for about one minute, the influence of cornering is cancelled. Even if an error occurs to the cornering correction, therefore, there are few erroneous alarms caused by the influence of the cornering in the conventional DWS.

Nevertheless, if a vehicle runs on a circular track such as a test course, the vehicle runs only on a left curved passage or a right curved passage. Due to this, even if judgement values for one minute are averaged, the influence of cornering is not cancelled and erroneous alarm is sometimes given. This is because there is a rotational difference between the inner wheels and the outer wheels irrespective of them being at normal internal pressure and this rotational difference cannot be distinguished from the rotational difference caused by pressure reduction.

In view of the above circumstances, the present invention has been made, and an object is to provide an apparatus and method for alarming decrease in tyre air-pressure capable of accurately making a cornering correction and improving accuracy for detecting reduction of a tyre pressure.

According to the present invention, there is provided an apparatus for indicating a decrease in internal pressure of tires according to claim 1.

In accordance with the present invention, there is also provided a method for alarming a decrease in internal pressure of a tires according to claim 2.

Hereinafter an apparatus and method for alarming decrease in tyre air-pressure according to the present invention will be described, by way of example only, with reference to the accompanying drawings, in which:

Figure 1 is a block diagram showing one embodiment of the apparatus for alarming decrease in tyre air-pressure according to the present invention; and

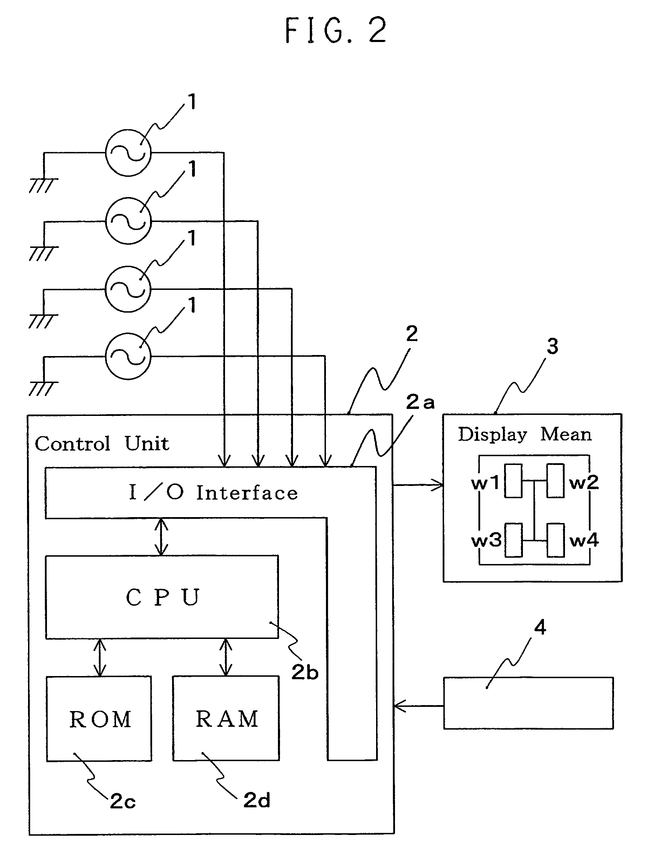

Figure 2 is a block diagram showing the electrical arrangement of the apparatus for alarming decrease in tyre air pressure shown in Figure 1.

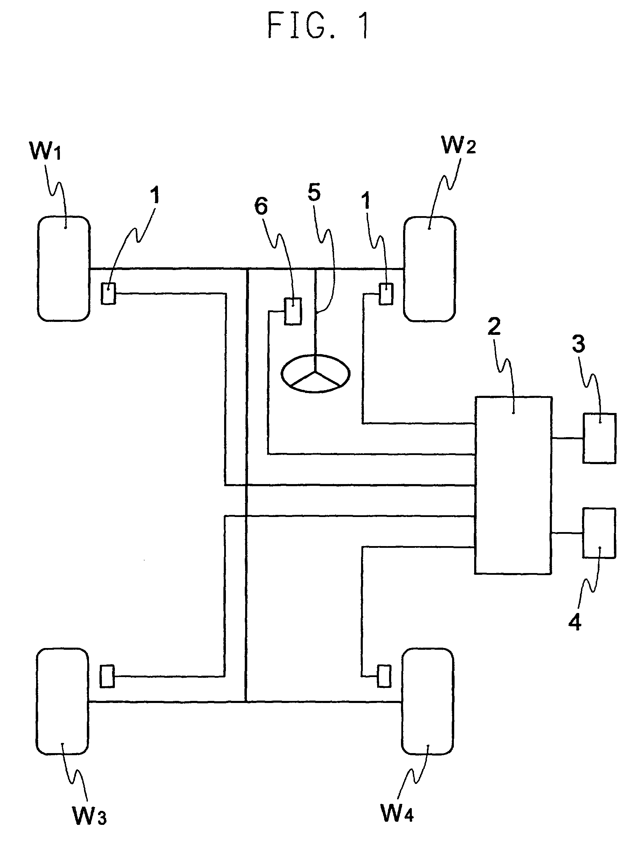

As shown in Figure 1, an apparatus for alarming decrease in tyre air-pressure according to one embodiment of the present invention is designed to detect whether or not the air pressures of, for example, any of four tyres $W_1$, $W_2$, $W_3$, and W4 installed to a four-wheeled vehicle are reduced, and has ordinary wheel speed sensors 1 provided in connection with the respective tyres $W_1$, $W_2$, $W_3$ and $W_4$. The outputs of the wheel sensors 1 are applied to a control unit 2. To the control unit 2, there are connected a display means 3 which is constituted by a liquid crystal display device, a plasma display device or CRT for notifying the tyre W, whose air pressure has decreased, and an initialisation switch 4 which can be operated by a driver. In addition, a steering angle sensor 6 is attached to a steering wheel 5 and the control unit 2 gives weight corresponding to a steering angle value inputted from the steering angle sensor 6.

The control unit 2 consists of an I/O interface 2a necessary to transmit and receive a signal to and from an external device, a CPU 2b functioning as an arithmetic processing centre, a ROM 2c storing the control operation program of the CPU 2b, and a RAM 2d into which data is temporarily written or from which data is read when the CPU 2b conducts a control operation. Arithmetic processing means and judgement value correcting means in this embodiment are included in the control unit 2.

From each wheel speed sensor 1, a pulse signal (referred to as "wheel speed pulse" hereinafter) corresponding to the number of revolutions of the tyre $W_i$ is outputted. The CPU 2b calculates the rotational angular velocity $F_i$ of the tyre $W_i$ on a predetermined sampling period $\Delta$(sec), e.g. per $\Delta T = 1$ second. based on the wheel speed pulse outputted from the wheel speed sensor 1.

Here, since tyres W, are not all the same even though within a specification, the effective rolling radii of the tyres W, (values each obtained by dividing a distance advancing by one rotation by $2\pi$) are not necessarily equal even if all of the tyres $W_i$ have ordinary internal pressure. As a result, the rotational angular velocities $F_1$ of the tyres $W_i$ are slightly different. In view of this a corrected rotational angular velocity F1, to cancel the irregularity due to the initial difference is calculated. To be specific, the respective rotational angular velocity is corrected as follows:

$FI_1 = F_1$
$FI_2 = mF_2$
$FI_3 = F_3$
$FI_4 = nF_4$

Correction coefficients m and n are obtained as m = $F_1/F_2$ and n = $F_3/F_4$ by calculating the rotational angular velocity $F_1$ under conditions, for example. that a vehicle is running on a straight road and then obtaining the coefficients m and n based on the calculated rotational angular velocity $F_i$.

Then, based on the corrected rotational angular velocity $F1_1$, a vehicle speed V(Vi/4) and lateral acceleration (lateral G) and the like are calculated.

Further, a pressure reduction judgement value (DEL) for detecting decrease in air-pressure of the tyre $W_i$ is to compare the difference between, for example, two sums of pairs of front-wheel tyres and rear-wheel tyres on a diagonal. Specifically, the sum of signals from one pair of wheels on a diagonal is subtracted from the sum of signals from the other pair of wheels on the diagonal, and a ratio of the subtraction result to the average value of the two sums is obtained from the following formula (1):

$$DEL = \frac{2 \times \{(V1 + V4) - (V2 + V3)\}}{V1 + V2 + V3 + V4} \times 100\% \qquad (1)$$

Conventionally, using this DEL value, the average value DEL5 in last n DEL values (DEL(n)), e.g. last five DEL values, and the average value DELAV of last n DEL5 values (DEL5(n)), e.g. last twelve DEL5 values, are calculated from the following formulas (2) and (3), respectively, and a pressure reduction judgement is then made using the resultant DELAV:

$$DEL5 = (DEL(4) + DEL(3) + DEL(2) + DEL(1) + DEL(0))/5 \qquad (2)$$

$$DELAV = (DEL5(11) + DEL5(10) + DEL5(9) + \ldots + DEL5(0))/12 \qquad (3)$$

According to the present invention, by contrast, the steering angle sensor is attached to the steering wheel and a DEL value is weighted with the steering angle, thereby correcting the DEL value. For example, a weight W to the steering angle $\theta$ is represented as follows:

(1) where $-30° \leq \theta \leq 30°$, weight W = 4;
(2) where $-90° \leq \theta < -30°$ or $30° < \theta \leq 90°$, weight W = 2; and
(3) where $\theta < -90°$ or $90° < \theta$, weight W = 1.

Based on the above, the weighted DEL value in the formula (1) and the weighted DEL5 in the formula (2) are represented by the following formulas (4) and (5):

$$DEL_w = DEL \times W \qquad (4)$$

$$DEL_w5 = (DEL_w(4) + DEL_w(3) + DEL_w(2) +$$

$$DEL_w(1) + DEL_w(0))/\Sigma W \qquad (5)$$

In the formula (5), ΣW is the integrated value of last five weights W.

Therefore, according to the present invention, by making a pressure reduction judgement using the weighted average value DELAV represented by the following formula (6), it is possible to decrease the influence of cornering and to prevent erroneous alarm. It is noted that the cases where the weight becomes W = 4 decreases if a vehicle is running on a mountain path having continuous right and left curves. However, pressure reduction can be judged in the same degree as that of the conventional judgement.

$$DEL_wAV = \{DEL_w5(11) \mathrm{x} W(11) + DEL_w5(10) \mathrm{x} W(10) + DEL_w5(9) \mathrm{x} W(9) + \ldots + DEL_w5(0) \mathrm{x} W(0)\} / \{W(11) + W(10) + W(9) + \ldots + W(0)\} \quad .(6)$$

In the formula (6), W(n) is the integrated value of last n weights W.

Next, the present invention will be described based on one example. The present invention should not be, however, limited to the following example.

EXAMPLE

A steering angle sensor was attached to the steering wheel of a vehicle for which the air-pressure of tyres were set normally, sensor information was captured by a personal computer and a software inputted into the conventional DWS was changed as shown in the above formulas (4) to (6).

Next, the vehicle circulated on a test course on which not only corners but also straight passages exist (maximum steering angle θ = -60°).

As a result, while an erroneous alarm was given conventionally even with the tyres having normal air pressure, no erroneous alarm was given in this example.

Next, for all the tyres, the air pressure of one tyre was reduced by 30% and those of the other tyres were set at normal internal pressure and the vehicle was run with the same cornering. As a result, it was confirmed that an alarm for a pressure reduction was normally given.

As stated so far, according to the present invention, emphasis is put on a DEL value on a straight region and a judgement value is calculated using a weight determined based on a steering angle. Thus, the frequency of the occurrence of erroneous alarms during cornering can be reduced. As a result, it is possible to improve accuracy for detecting the pressure reduction of tyres.

**Claims**

1. An apparatus for indicating a decrease in internal pressure of tires attached to a four-wheeled vehicle using judgment values obtained based on tire rotational information of said vehicle, comprising rational information detecting means (1) for detecting rational information based on rotation of each of the tires ($W_1, W_2, W_3, W_4$);
   memory means (2d) for storing the rotational information on each of the tires;
   arithmetic processing means (2b) for processing a judgment value based on the rotational information based on each of the tires; and
   judgment value correcting means for dividing angle values obtained by a steering angle sensor (6) attached on a steering wheel (5) into predetermined ranges, assigning a weight (W) to each of the predetermined ranges, and correcting the judgement value using a weight corresponding to cornering during driving of said vehicle.

2. A method for indicating a decrease in internal pressure of tires attached to a four-wheeled vehicle using judgment values obtained based on tire rotational information, comprising the steps of: obtaining rotational information on each of the tires ($W_1, W_2, W_3, W_4$); storing the rotational information on each of the tires;
   processing a judgment value based on the rotational information on each of the tires;
   dividing angle values obtained by a steering angle sensor (6) attached to a steering wheel (5) into predetermined ranges and setting a weight to each of the predetermined ranges; and
   correcting the judgment value using a weight (W) corresponding to cornering during driving of said vehicle.

**Patentansprüche**

1. Vorrichtung zum Anzeigen einer Abnahme im Innendruck von Reifen, die an einem Vierradfahrzeug angebracht sind, unter Verwendung von Bestimmungswerten, die auf der Basis von Rotationsinformationen der Reifen des Fahrzeugs erhalten werden, umfassend ein Rotationsinformations-Detektionsmittel (1) zum Detektieren von Rotationsinformationen auf der Basis der Rotation von jedem der Reifen ($W_1$, $W_2$, $W_3$, $W_4$),

ein Speichermittel (2d) zum Speichern der Rotationsinformationen über jeden der Reifen,

ein arithmetisches Verarbeitungsmittel (2b) zum Verarbeiten eines Bestimmungswertes auf der Basis der Rotationsinformationen auf der Basis von jedem der Reifen, und

ein Bestimmungswert-Korrekturmittel zum Dividieren von Winkelwerten, die von einem Lenkwinkelsensor (6) erhalten werden, der an einem Lenkrad (5) angebracht ist, in vorbestimmte Bereiche, zum Zuordnen eines Gewichtes (W) zu jedem der vorbestimmten Bereiche und zum Korrigieren des Bestimmungswertes unter Verwendung eines Gewichtes, das während der Fahrt des Fahrzeugs der Kurvenfahrt entspricht.

2. Verfahren zum Anzeigen einer Abnahme im Innendruck von Reifen, die an einem Vierradfahrzeug angebracht sind, unter Verwendung von Bestimmungswerten, die auf der Basis von Rotationsinformationen der Reifen erhalten werden, mit den Schritten, dass:

Rotationsinformationen von jedem der Reifen ($W_1$, $W_2$, $W_3$, $W_4$) beschafft werden,

die Rotationsinformationen über jeden der Reifen gespeichert werden,

ein Bestimmungswert auf der Basis der Rotationsinformationen über jeden der Reifen verarbeitet wird,

Winkelwerte, die von einem Lenkwinkelsensor (6) erhalten werden, der an einem Lenkrad (5) angebracht ist, in vorbestimmte Bereiche unterteilt werden und ein Gewicht für jeden der vorbestimmten Bereiche festgelegt wird, und

der Bestimmungswert unter Verwendung eines Gewichtes (W), das während der Fahrt des Fahrzeuges der Kurvenfahrt entspricht, korrigiert wird.

**Revendications**

1. Appareil destiné à indiquer une diminution de la pression interne de pneumatiques relié à un véhicule à quatre roues et utilisant des valeurs de jugement obtenues sur la base d'informations de rotation des pneumatiques dudit véhicule, comprenant un moyen de détection d'informations rationnelles (1) destiné à détecter des informations rationnelles sur la base de la rotation de chacun des pneumatiques ($W_1$, $W_2$, $W_3$, $W_4$) ;

un moyen de mémoire (2d) destiné à stocker les informations de rotation relatives à chacun des pneumatiques ;

un moyen de traitement arithmétique (2b) destiné à traiter une valeur de jugement sur la base des informations de rotation basées sur chacun des pneumatiques ; et

un moyen de correction de valeur de jugement destiné à diviser des valeurs d'angle obtenues par un capteur d'angle de braquage (6) relié à une roue directrice (5) en gammes prédéterminées, à attribuer une pondération (W) à chacune des gammes prédéterminées, et à corriger la valeur de jugement en utilisant une pondération correspondant à une dérive pendant la conduite dudit véhicule.

2. Procédé d'indication d'une diminution de la pression interne de pneumatiques relié à un véhicule à quatre roues et utilisant des valeurs de jugement obtenues sur la base d'informations de rotation des pneumatiques, comprenant les étapes consistant à :

obtenir des informations de rotation relatives à chacun des pneumatiques ($W_1$, $W_2$, $W_3$, $W_4$) ;

stocker les informations de rotation relatives à chacun des pneumatiques ;

traiter une valeur de jugement sur la base des informations de rotation relatives à chacun des pneumatiques ;

diviser les valeurs d'angles obtenues par un capteur d'angle de braquage (6) relié à une roue directrice (5) en gammes prédéterminées et définir une pondération pour chacune des gammes prédéterminées ; et

corriger la valeur de jugement en utilisant une pondération (W) correspondant à une dérive pendant la conduite dudit véhicule.

# FIG. 1

# FIG. 2